Europäisches Patentamt

European Patent Office

Office européen des brevets

(11) Veröffentlichungsnummer: **0 282 701**
**A2**

## (12) EUROPÄISCHE PATENTANMELDUNG

(21) Anmeldenummer: 88100952.6

(22) Anmeldetag: 22.01.88

(51) Int. Cl.⁴: **C09K 3/14**

(30) Priorität: 18.03.87 DE 3708866

(43) Veröffentlichungstag der Anmeldung:
21.09.88 Patentblatt 88/38

(84) Benannte Vertragsstaaten:
AT DE ES FR IT

(71) Anmelder: **Sebald, Josef**
**Walbenreuth 19**
**D-8598 Waldershof(DE)**

(72) Erfinder: **Sebald, Josef**
**Walbenreuth 19**
**D-8598 Waldershof(DE)**

(74) Vertreter: **Lamprecht, Helmut, Dipl.-Ing.**
**Corneliusstrasse 42**
**D-8000 München 5(DE)**

(54) **Verfahren zur Herstellung eines Schleifmittels.**

(57) Zur Herstellung eines Schleifmittels werden Perlen eines Trägermaterials mit einem Überzug aus einem körnigen, schmirgelnden Material und einem Bindemittel versehen, bis die gewünschte Wandstärke erreicht ist, wobei für die Perlen ein Material gewählt wird, welches formstabil ist und durch äußere Einwirkung durch die aushärtende bzw. ausgehärtete überzugsschicht hindurch austreibbar ist und dieses Material während des Aushärtens oder nach dem Aushärten des Überzugs zur Bildung von Hohlkörpern ausgetrieben wird.

Fig. 7

EP 0 282 701 A2

## Verfahren zur Herstellung eines Schleifmittels.

Die Erfindung betrifft ein Verfahren zur Herstellung eines Schleifmittels unter Verwendung eines körnigen, schmirgelnden Materials und eines Bindemittels.

Um eine Verbesserung der Schleifwirkung bei Schleifkörpern und sogenannten Schleifmitteln auf elastischer Unterlage, wie Schleifbändern oder flexiblen Schleifscheiben, zu erreichen, ist es erwünscht, daß die schleifende Oberfläche Poren aufweist. Poren reduzieren die wirksame Oberfläche und ermöglichen eine Erhöhung des spezifischen Anpreßdrucks während des Schleifvorgangs. Außerdem wird die Angriffswirkung durch die Porenränder verbessert.

Nach herkömmlichen Verfahren hergestellte, gepreßte keramische oder kunstharzgebundene Schleifkörper weisen Poren auf, welche entweder durch Schwund oder durch Zusätze, wie z.B. Nußschalenbruch oder Kunststoffgranulate, gebildet werden. Diese Poren weisen in der Regel kantige oder spitze Umgrenzungen auf, in welchen Späne und Schleifschlamm festgehalten werden, wodurch die Schleifleistung beeinträchtigt wird. Ausserdem kann die Porenbildung nicht mit der wünschenswerten Genauigkeit vorherbestimmt werden. Erfolgt die Porenbildung durch das Ausbrennen von Zuschlagstoffen ist damit auch eine Umweltbelastung verbunden, der durch kostenintensive Maßnahmen entgegengewirkt werden muß.

Durch die Herstellung von Schleifkörpern mit mineralischer oder organischer Bindung im Gießverfahren wird zwar die Formgebung der Endprodukte erleichtert, aufgrund der Dichte derartiger Schleifkörper verfügen sie jedoch in der Regel nicht über die wünschenswerte Schneidkraft und Angriffsleistung, so daß gerade bei derartigen Schleifkörpern eine gezielte und beherrschbare Porenbildung wünschenswert ist.

Der Erfindung liegt deshalb die Aufgabe zugrunde, bei Schleifkörpern oder Schleifmitteln auf elastischer Unterlage in jeder beliebigen Bindungsart die Schneidkraft und Angriffsleistung zu verbessern. Insbesondere soll dies durch eine genau dosierbare Ausbildung von Poren im schleifenden Material erreicht werden, wobei außerdem diese Poren runde Umgrenzungen aufweisen sollen, um das Festhalten von Spänen und/oder Schleifschlamm zu vermeiden und ein wirksames Freispülen der Poren durch Kühlwasser zu ermöglichen.

Es hat sich gezeigt, daß diese Aufgabe am besten in der Weise gelöst werden kann, daß dem zur Herstellung von Schleifkörpern und Schleifmitteln auf elastischer Unterlage bestimmten Gemisch aus Schleifmittel und Bindemittel kugelförmige Hohlkörper aus schmirgelndem Material beigegeben werden. Derartige Hohlkörper können in der schleifenden Oberfläche aufbrechen und dann runde Poren umgrenzen, wobei zugleich die Ränder dieser Poren die aggressive Wirkung erhöhen.

Als Hohlkörper aus schmirgelndem Material sind bisher nur aus Korundmasse elektrisch geschmolzene Hohlperlen bekannt, die unter der Bezeichnung Kugelkorund im Handel sind. Dieses Material ist aber für den der Erfindung zugrundeliegenden Zweck aus den nachfolgend genannten Gründen nur wenig geeignet.

Für die Herstellung gepreßter Schleifkörper ist Kugelkorund ungeeignet, weil es aufgrund ungleicher und zu schwacher Wandstärken zu wenig druckfest ist.

Bei der Herstellung gegossener Schleifkörper kommt es wegen des geringen spezifischen Gewichts zum Aufschwimmen an die Oberfläche, wodurch die angestrebte Strukturtreue des Materials nicht erreicht werden kann.

Bei anderen Anwendungen ist es trotz der vorgenannten Schwächen teilweise brauchbar, jedoch nur auf Korundbasis, weshalb es schleiftechnisch nur für bestimmte Werkstoffe einsetzbar ist. Außerdem deckt es nur einen kleinen Körnungsbereich ab.

Die zu geringe Wandstärke des Kugelkorunds ergibt nur eine geringe Druckfestigkeit, weshalb der gewünschte Schneideffekt durch Zusammenbrechen des Kugelkorunds meist verlorengeht.

Damit Schleifkörper und Schleifmittel auf elastischer Unterlage mit der gewünschten Porenstruktur und mit optimaler Strukturtreue, sowie ausreichender Materialvielfalt geschaffen werden können, muß zunächst ein geeignetes, hohlkugelartiges Schleifmittel geschaffen werden, welches keinen Materialbeschränkungen hinsichtlich des schmirgelnden Bestandteils unterliegt und mit je nach den gegebenen Erfordernissen unterschiedlicher Wandstärke und unterschiedlichem Durchmesser zuverlässig hergestellt werden kann. Ein derartiges Material weist demnach Eigenschaften auf, welche es geeignet machen, nicht nur als porenbildender Zusatz zu Schleifmittelmischungen verwendet zu werden, sondern auch als selbständiges Schleifmittel, wie es etwa beim Trommelschleifen oder Sandstrahlen eingesetzt wird.

Zur Lösung der gestellten Aufgabe besteht die Erfindung darin, daß Perlen eines Trägermaterials mit einem Überzug aus dem gekörnten, schmirgelnden Material und einem Bindemittel versehen werden, bis die gewünschte Wandstärke des Überzegs erreicht ist, daß der Überzug ausgehärtet wird, daß für die Perlen ein Material gewählt wird, welches einerseits formstabil ist und andererseits durch äußere Einwirkung durch die aushärtende bzw. ausgehärtete Überzugsschicht hindurch austreibbar ist und daß dieses Material während des Aushärtens oder nach dem Aushärten des Überzugs zur Bildung von Hohlkörpern ausgetrieben wird.

Nachdem der Überzug unter Verwendung eines körnigen Schmirgelmaterials einerseits und eines Bindemittels andererseits aufgebaut wird, bestehen hinsichtlich der Auswahl des schmirgelnden Materials keinerlei Beschränkungen. Da die Kugelform durch einen Trägerkörper gewährleistet wird, auf welchem der Überzug aufgebaut wird, können die Kugeln in jeder sinnvollen und gewünschten Durchmessergröße hergestellt werden. Es läßt sich also ein dem jeweiligen Verwendungszweck sehr vielseitig angepaßtes Schleifmittel erzeugen.

Eine zweckmäßige Ausgestaltung besteht darin, daß die Perlen aus einem durch Hitzeeinwirkung in gasförmigem Zustand austreibbaren Material bestehen. Besonders geeignet ist hierfür geschäumtes Polystyrol, weil es einerseits gut zu Perlen mit unterschiedlichem, vorgegebenem Durchmesser verarbeitet werden kann und weil es andererseits eine sehr geringe Dichte aufweist, sich leicht durch Hitzeeinwirkung verflüchtigen läßt und hierbei nur ein vergleichsweise geringes Gasvolumen anfällt.

Eine weitere zweckmäßige Ausbildung des Verfahrens besteht darin, daß die Perlen in einer Mischmaschine in einem Pelletierverfahren - schichtweise bis zum Erreichen der gewünschten Wandstärke mit dem Überzug versehen werden. Dabei werden zweckmäßigerweise die Perlen mit Leimwasser oder einem Haftmittel benetzt und es wird auf sie abwechselnd das schmirgelnde Material und ein Bindemittel aufgetragen. Das Leimwasser oder andere Haftmittel sorgen dafür, daß das - schmirgelnde Material bis zum Aushärten des Bindemittels auf den Perlen haften bleibt.

Vorzugsweise wird das Polystyrol durch die Hitzeeinwirkung beim Aushärten des Überzugs ausgetrieben.

Eine weitere zweckmäßige Ausgestaltung des Verfahrens besteht darin, daß die ausgehärteten und vom Trägermaterial befreiten Hohlkörper als Porenbildner dosiert mit einem weiteren - schmirgelnden Material vermischt werden und daß das Mischprodukt als Schleifmittel zu einem Schleifkörper oder als Beschichtung einer elastischen Unterlage weiterverarbeitet wird.

Da nicht nur die Wandstärke der Hohlkörper und deren Durchmesser beliebig ausgewählt werden kann, sondern über die manipulierbare Bindungshärte und die Verwendung sämtlicher Körnungen und Schleifmittelarten, wie z.B. Korund, Edelkorund, Siliciumcarbid, Naturschmirgel und so weiter, eine Anpassung an alle möglichen Anforderungen erfolgen kann, ist das Produkt außerordentlich vielseitig einsetzbar und kann nach den heutigen Erkenntnissen allen zu schleifenden Werkstoffen, wie Stahl, Metallen, Stein, Keramik, Glas usw., angepaßt werden.

Anhand der nun folgenden Beschreibung eines anhand der Fig. 1 bis 7 dargestellten Ausführungsbeispiels der Erfindung wird diese näher erläutert.

Es zeigt:

Fig. 1 einen Schnitt durch eine Perle aus geschäumtem Polystyrol als Trägerkörper für die Durchführung des erfindungsgemäßen Verfahrens,

Fig. 2 einen Schnitt durch die in Fig. 1 gezeigte Perle mit einer ersten Überzugsschicht aus einem körnigen, schmirgelndem Material und einem Bindemittel,

Fig. 3 einen Schnitt durch die Perle nach dem Aufbringen einer zweiten Überzugsschicht,

Fig. 4 einen Schnitt durch die Perle nach dem Aufbringen einer dritten Überzugsschicht,

Fig. 5 die Perle nach dem Aufbringen einer weiteren Überzugsschicht mit der gewünchten Dicke der Überzugsschicht vor dem Aushärten des Überzugs,

Fig. 6 einen der Fig. 5 entsprechenden Schnitt nach dem Aushärten des Überzugs und

Fig. 7 einen Schnitt durch den Kantenbereich einer unter Verwendung des erfindungsgemäßen Schleifmittels hergestellten Schleifscheibe.

Vor der Herstellung eines Hohlkörpers nach dem erfindungsgemäßen Verfahren wird zunächst eine Auswahl getroffen hinsichtlich des zu verwendenden schmirgelnden Materials, des zu verwendenden Bindemittels und des inneren Durchmessers des zu erzeugenden, kugelförmigen Hohlkörpers.

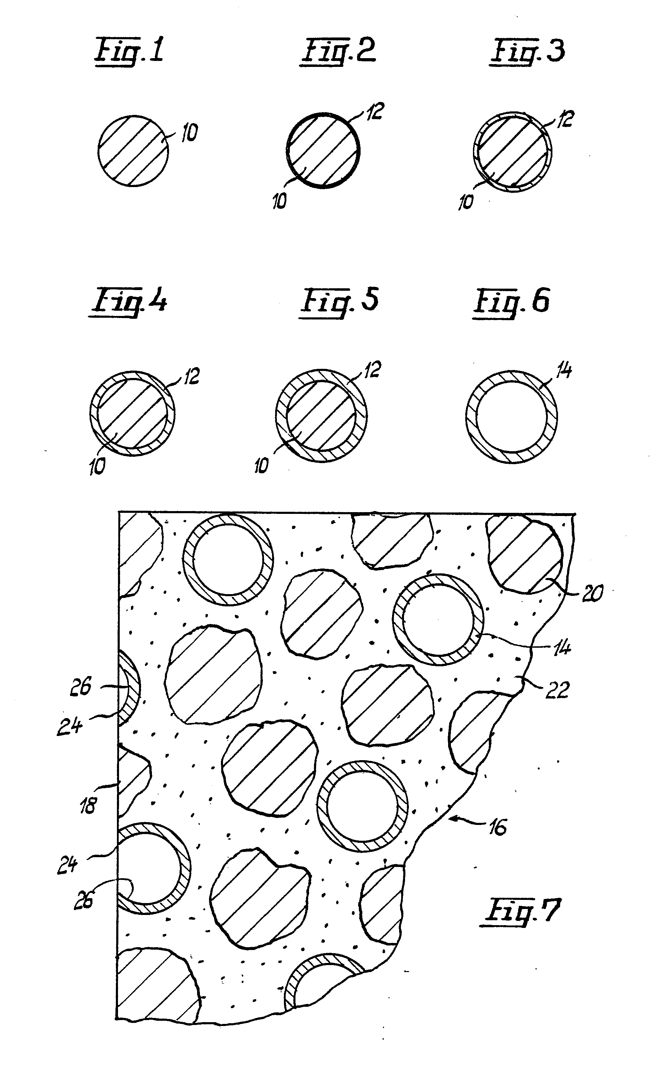

Kugeln 10 aus geschäumten Polystyrol mit einem dem gewählten Innendurchmesser des Hohlkörpers entsprechenden Durchmesser werden in eine Pelletiervorrichtung eingebracht, mit Leimwasser benetzt und mit einer ersten Schicht eines Überzugs 12 aus dem ausgewählten, körnigen, - schmirgelnden Material und einem gewählten Bindemittel versehen. Das Leimwasser sorgt für die vorläufige Bindung zwischen den aufgebrachten Stoffen und der Styroporkugel 10. Entsprechend der gewünschten Wandstärke des zu erzeugenden Hohlkörpers werden weitere Schichten aufgebracht, wie dies anhand der Fig. 3 bis 5 gezeigt ist, bis - schließlich die gewünschte Wandstärke des Überzugs erreicht wird, die in Fig. 5 gezeigt ist. Anschließend werden die mit dem Überzug 12 versehenen Polystyrolkugeln 10 einer Wärmewirkung ausgesetzt, welche zum Aushärten des im überzug 12 enthaltenen Bindemittels und damit zum Abbinden des Überzugs 12 führt. Unter dem Einfluß dieser Wärmeeinwirkung geht das Polystyrol der Kugel oder Perle 10 in einen gasförmigen Zustand über und entweicht durch den Überzug 12, so daß nach Beendigung des Aushärtevorgangs eine Hohlkugel 14 aus gebundenem, schmirgelndem Material übrigbleibt, wie sie in Fig. 6 gezeigt ist.

Bei der Durchführung des erfindungsgemäßen Verfahrens bestehen keinerlei Einschränkungen hinsichtlich des zu verwendenden Bindemittels und der Art der Aushärtung. So kann beispielsweise ein Kunstharzbinder kalt ausgehärtet werden; es kann aber auch der Überzug 12 keramisch gebrannt werden.

Wird eine kalte Aushärtung durchgeführt, muß eine zusätzliche Wärmeeinwirkung vorgesehen werden, um das Polystyrol aus dem Hohlkörper 14 auszutreiben.

Die erzeugten Hohlkörper 14 können entweder als unmittelbar schmirgelndes Material, beispielsweise beim Trommelschleifen oder Sandstrahlen eingesetzt werden, sie können aber auch zusammen mit einem elastischen Binder und gegebenenfalls anderem schmirgelnden Material beliebiger Auswahl auf eine elastische Unterlage verbracht werden, um beispielsweise Schleifbänder herzustellen. Sie können aber auch mit einem weiteren schmirgelnden Material und einem Binder zu festen Schleifkörpern, beispielsweise Schleifscheiben, verarbeitet werden.

In Fig. 7 ist ein Schnitt durch den Kantenbereich eines Schleifkörpers 16 dargestellt, der im Preß-oder Gießverfahren hergestellt werden kann. Die schmirgelnde Oberfläche dieses Schleifkörpers ist mit 18 bezeichnet.

Im Schleifkörper befinden sich Hohlkörper 14, körniges, schmirgelndes Material 20 und ein Bindemittel 22. Wie man aus Fig. 7 deutlich entnehmen kann, führen die erfindungsgemäß hergestellten Hohlkörper 14 zur Bildung von Poren, welche sich nach der schmirgelnden Oberfläche 18 öffnen und welche einerseits einen runden Umriß 24 der Porenöffnung und eine hohlkugelige Begrenzung 26 des Porenraumes aufweisen, so daß sich Schleifspäne und Schleifschlamm in den Poren nicht festsetzen und jederzeit ausgespült werden können.

**Ansprüche**

1. Verfahren zur Herstellung eines Schleifmittels unter Verwendung eines körnigen, - schmirgelnden Materials und eines Bindemittels, *dadurch gekennzeichnet,*
daß Perlen eines Trägermaterials mit einem Überzug aus dem körnigen, schmirgelnden Material und einem Bindemittel versehen werden, bis die gewünschte Wandstärke erreicht ist, daß der überzug ausgehärtet wird, daß für die Perlen ein Material gewählt wird, welches formstabil ist und durch äußere Einwirkung durch die aushärtende bzw. ausgehärtete Überzugsschicht hindurch austreibbar ist und daß dieses Material während des Aushärtens oder nach dem Aushärten des Überzugs zur Bildung von Hohlkörpern ausgetrieben wird.

2. Verfahren nach Anspruch 1, *dadurch gekennzeichnet,* daß die Perlen aus einem durch Hitzeeinwirkung in gasförmigem Zustand austreibbaren Material bestehen.

3. Verfahren nach Anspruch 2, *dadurch gekennzeichnet,* daß die Perlen aus geschäumtem Polystyrol bestehen.

4. Verfahren nach einem der Ansprüche 1 bis 3, *dadurch gekennzeichnet,* daß die Perlen in einer Mischmaschine in einem Pelletierverfahren - schichtweise bis zum Erreichen der gewünschten Wandstärke mit dem Überzug versehen werden.

5. Verfahren nach einem der vorhergehenden Ansprüche, *dadurch gekennzeichnet,* daß die Perlen mit Leimwasser oder einem ähnlichen Haftmittel benetzt werden und auf sie abwechselnd das Schleifmittel und ein Bindemittel übertragen wird.

6. Verfahren nach Anspruch 3, *dadurch gekennzeichnet,* daß das Polystyrol durch die Hitzeeinwirkung beim Aushärten des überzugs ausgetrieben wird.

7. Verfahren nach einem der Ansprüche 1 bis 6, *dadurch gekennzeichnet,* daß die ausgehärteten und vom Trägermaterial befreiten Hohlkörper als Porenbildner dosiert mit einem weiteren - schmirgelnden Material und einem Bindemittel vermischt werden und daß das Mischprodukt als Schleifmittel zu einem Schleifkörper oder als Beschichtung einer elastischen Unterlage weiterverarbeitet wird.

8. Verfahren nach Anspruch 7, *dadurch gekennzeichnet,* daß der Schleifkörper im Preßverfahren hergestellt wird.

9. Verfahren nach Anspruch 7, *dadurch gekennzeichnet,* daß der Schleifkörper im Gießverfahren hergestellt wird.

_Fig_.1

_Fig_.2

_Fig_.3

10

12

10

12

10

_Fig_.4

_Fig_.5

_Fig_.6

12

10

12

10

14

26

24

18

24

26

20

14

22

16

_Fig_.7